# EUROPEAN PATENT APPLICATION

(11) **EP 3 693 300 A1**
(43) Date of publication of application: **12.08.2020**
(21) Application number: 20153322.1
(22) Date of filing: 23.01.2020
(51) Int. Cl.: B65G 47/51

(54) **A HORIZONTAL BUFFER DEVICE**

(30) Priority: 08.02.2019 IT 201900001867
(71) Applicant: Cavanna S.p.A., 28077 Prato Sesia (NO) (IT)
(72) Inventor: BROLLI, Mr. Elio, I-28077 Prato Sesia (Novara) (IT); SCARONE, Mr. Luca, I-28077 Prato Sesia (Novara) (IT); IOPPA, Mr. Lorenzo, I-28077 Prato Sesia (Novara) (IT)
(74) Representative: Marchitelli, Mauro

(57) **Abstract**

A buffer device for temporarily storing products in transport systems, comprising:
- a stationary frame (20) with fixed axle wheels (22, 24, 26, 28, 30, 32, 34),
- a movable carriage (40) and bearing at least one movable-axle wheel (42, 44),
- at least one chain (46) cooperating with said at least one movable-axle wheel (42, 44) and extending along a closed-loop path including horizontal chain sections with a fixed length (46a, 46b) and horizontal chain sections of variable length (46c, 46d, 46e, 46f), wherein the length of said horizontal chain sections of variable length (46c, 46d, 46e, 46f) varies according to the position of said carriage (40),
- a plurality of fixed chain supports (50a, 50b, 50d, 50f) that support respective horizontal chain sections (46a, 46b, 46d, 46f), and
- at least one chain support with movable sectors (50c, 50e), which supports a respective horizontal chain section of variable length (46c, 46e), including a plurality of sectors (52) movable between an engagement position and a disengagement position of the chain (46), and
- a control mechanism which moves the sectors (52) of the movable sector chain support (50c, 50e) facing said at least one movable-axle wheel (42, 44) towards the disengagement position.

## Description

### Field of the invention

The present invention relates to a buffer device for temporarily storing products in transport systems.

### Description of the prior art

In the sector of product packaging, for example, food products, it is frequently required to provide a buffer device between a product production unit and a packaging unit. The object of the buffer device is to temporarily accumulate variable quantities of products when variations occur between the speed of the production unit and the speed of the packaging unit.

Buffer devices are known in the state of the art that comprise at least one chain which extends along a closed-loop path and carries a plurality of product supports, movable between an inlet station and an outlet station. Examples of known buffer devices are described in EP-A-1398280 and EP-A-3277606.

More common buffer devices for packaging systems usually develop along a vertical direction, i.e. the height of the buffer devices is usually greater than their length.

In some applications, the vertical encumbrance of the buffer device can lead to installation problems, for example, in cases where the rooms in which the packaging systems are to be installed have a limited height.

It would therefore be desirable to provide buffer devices that mainly develop in the horizontal direction.

Producing buffer devices with a mainly horizontal development involves difficulties in providing adequate support to the horizontal chain sections having a variable length.

### Object and summary of the invention

The present invention aims to provide a buffer device for temporarily storing products in transport systems having a prevalently horizontal direction of development, and provided with an effective support for the horizontal chain sections of variable length.

According to the present invention, this object is achieved by a buffer device having the characteristics forming the subject of claim 1.

Optional embodiments form the subject of the dependent claims.

The claims form an integral part of the disclosure provided here in relation to the invention.

### Brief description of the drawings

The present invention will now be described in detail with reference to the attached drawings, given purely by way of non-limiting example, wherein:
- Figures 1 and 2 are schematic side views of a buffer device according to the present invention in two different operating positions,
- Figures 3 and 4 are perspective views of the part indicated by the arrow III in Figure 1, and
- Figure 5 illustrates the detail indicated by the arrow V in Figure 3.

### Detailed description

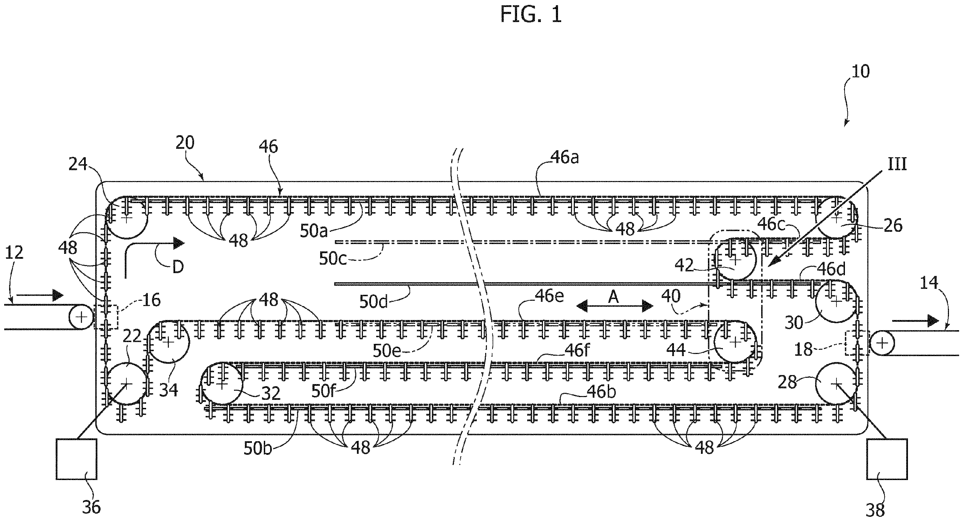

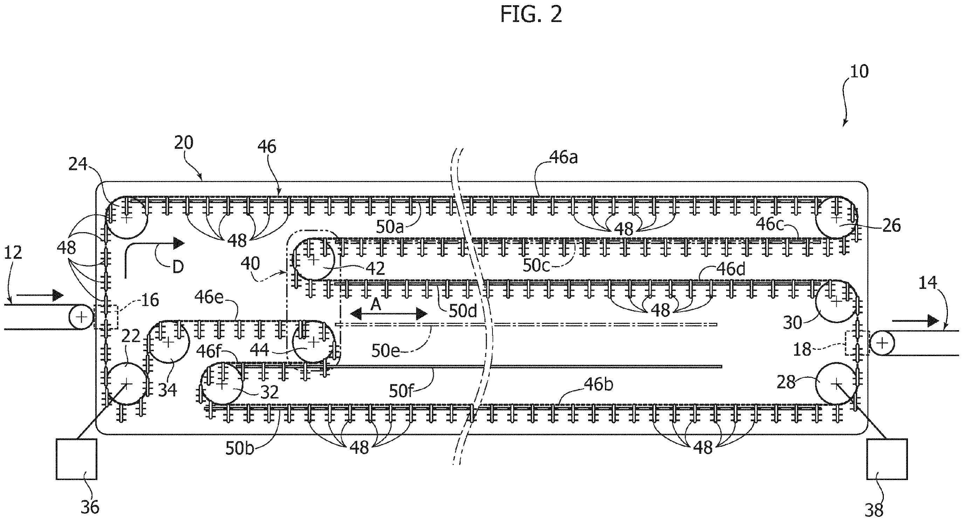

With reference to Figures 1 and 2, numeral 10 indicates a buffer device for temporarily storing products in a transport system. The buffer device 10 is arranged between an inlet conveyor 12 and an outlet conveyor 14. The inlet conveyor 12 feeds a continuous flow of products to an inlet station 16 of the buffer 10. The outlet conveyor 14 takes a continuous flow of products from an outlet station 18 of the buffer 10. The inlet conveyor 12 may, for example, transport products coming from a production unit (for example, an oven in the case of baked food products) and the outlet conveyor 14 may feed the products to a packaging unit.

The buffer device 10 has the object of temporarily storing the products in the steps in which there are variations in the process speed of the production unit or the packaging unit. For example, in the event that the packaging unit located downstream of the buffer device 10 should temporarily slow down or stop, the buffer device 10 temporarily accumulates the products coming from the production unit to avoid slowing down or stopping the production unit. The buffer unit 10 can also feed the packaging unit with a constant flow of products in the case of a temporary slowing down or stopping of the flow of products coming from the production unit.

The buffer device 10 comprises a stationary frame 20 which carries a plurality of wheels with fixed axles 22, 24, 26, 28, 30, 32, 34 rotatable around respective fixed rotation axes with respect to the stationary frame 20.

Four fixed-axle wheels 22, 24, 26, 28 are arranged at the vertices of a quadrilateral elongated in a horizontal direction. In the illustrated example, the axles of the wheels 22, 24, 26, 28 are arranged at the vertices of a rectangle. The two wheels 22, 28 located at the opposite ends of the lower side of the quadrilateral are powered by respective motors 36, 38. The remaining fixed-axle wheels 24, 26, 30, 32, 34 are idle around their respective axles.

The buffer device 10 comprises a carriage 40 movable with respect to the stationary frame 20 along a horizontal direction A and bearing at least one movable-axle wheel. In the illustrated example, the carriage 40 carries two movable-axle wheels 42, 44 freely rotatable around respective axles parallel to each other and parallel to the rotation axes of the fixed-axle wheels 22-34.

The buffer device 10 comprises at least one chain 46 cooperating with the fixed-axle wheels 22-34 and with the movable-axle wheels 42, 44. The chain 46 extends along a closed-loop path having a predominantly horizontal development direction. The path of the chain 46 comprises two sections with a fixed length 46a, 46b and four sections with a variable length 46c, 46d, 46e, 46f, the length of which varies according to the position of the carriage 40 along the horizontal direction A. The upper fixed length section 46a extends between the fixed-axle wheels 24, 26 and forms the upper horizontal section of the closed-loop path of the chain 46. The lower fixed length section 46b extends between the wheels 28 and 32 and forms the lower horizontal section of the closed-loop path of the chain 46.

The first variable length horizontal section 46c extends between the fixed-axle wheel 26 and the first movable-axle wheel 42. The second variable length horizontal section 46d extends between the first movable-axle wheel 42 and the fixed-axle wheel 30. The third variable length horizontal section 46e extends between the fixed-axle wheel 34 and the second movable-axle wheel 44. The fourth variable length horizontal section 46f extends between the fixed-axle wheel 32 and the second movable-axle wheel 44.

As can be seen in Figures 1 and 2, the movement from right to left of the carriage 40 produces an increase in the length of the chain sections 46c, 46d and a decrease in the length of the chain sections 46e and 46f. Conversely, a movement from left to right of the carriage 40 causes a decrease in the length of the sections 46c and 46d and an increase in the length of the sections 46e, 46f.

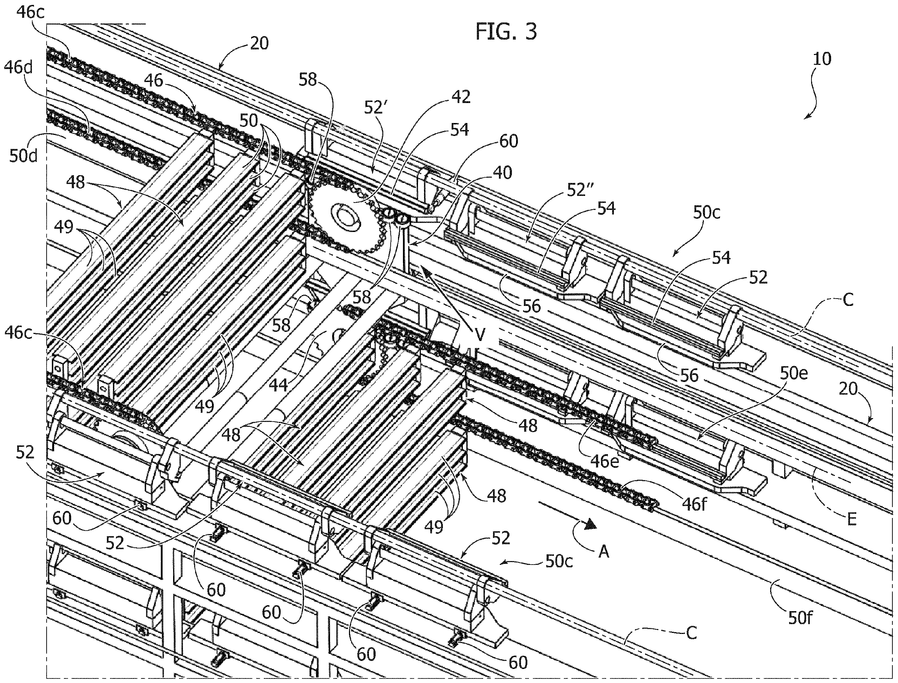

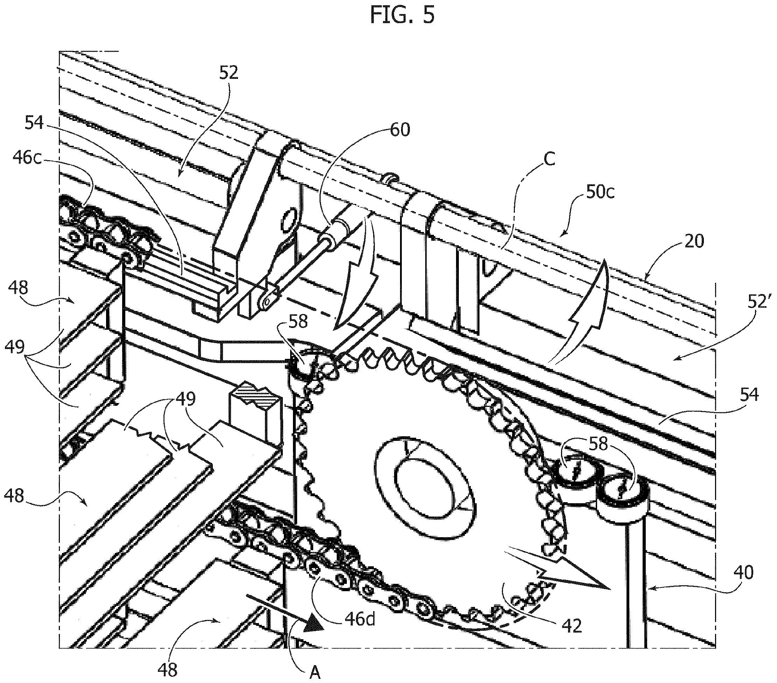

The chain 46 carries a plurality of product supports 48. The product supports 48 can be articulated to the chain 46 around respective axes transverse to the longitudinal axis of the chain 46. The product supports 48 are hung on the chain 46 and are constantly oriented in the vertical direction. As can be seen in Figures 3, 4 and 5, each product support 58 can be provided with a plurality of shelves 49 parallel to each other.

In a preferred embodiment, the buffer device 10 comprises two chains 46 parallel to each other, which extend along respective closed-loop paths overlapped on each other in the representation plane of Figures 1 and 2. Each chain 46 cooperates with respective fixed-axle wheels 22-34 and with respective movable-axle wheels 42, 44. The wheels associated with each chain 46 are coaxial with the homologous wheels of the other chain 46.

In the arrangement in which the buffer device 10 comprises two chains 46 parallel to each other, each product support 48 is elongated in an orthogonal direction with respect to the longitudinal axes of the chains 46 and is articulated to the two chains 46 around a single articulation axis transverse with respect to the longitudinal axes of the chains 46.

The buffer 10 comprises a plurality of chain supports 50a, 50b, 50c, 50d, 50e, 50f, which support respective horizontal chain sections 46a, 46b, 46c, 46e, 46f. The chain supports 50a, 50b, 50d and 50f are fixed. The fixed chain supports can be formed by respective longitudinal bars fixed to the stationary frame 20 of the buffer 10 and having a fixed length.

The chain supports 50c and 50e associated with the variable length chain sections 46c, 46e tangential to the upper parts of the movable-axle wheels 42, 44 are chain supports with movable sectors. Each of the movable-sector chain supports 50c, 50e is formed by a plurality of sectors 52 movable independently of each other between an engagement position and a disengagement position with respect to the chain 46.

With reference to Figures 3, 4 and 5, the movable sectors 52 of each chain support 50c, 50e follow one another along a horizontal direction parallel to the respective chain section 46c, 46e and are individually movable between an engagement position and a disengagement position. The sectors 52 have respective chain support portions 54 configured for engaging and supporting respective sections of the chain 46. In the engaged position, the chain support portions 54 of the sectors 52 of each chain support 50c, 50e are aligned with each other along a straight direction parallel to the respective chain section 46c, 46e. In particular, the chain support portions 54 of the sectors 52 are located below the respective chain section 46c, 46e and form a support for the rollers of the chain 46.

In the illustrated embodiment, the sectors 52 of each chain support 50c, 50e are articulated around a common articulation axis C parallel to the respective chain section 46c, 46e.

The buffer device 10 comprises a control mechanism which moves the sectors 52 of each chain support 50c, 50e facing the respective movable-axle wheel 42, 44 towards the disengaged position. In this way, only the sectors that would interfere with the movable axle wheels 42, 44 are disengaged from the engagement with the chain, while the remaining sectors 52 remain in the chain engagement position.

In a possible embodiment, the control mechanism which moves the sectors 52 towards the disengagement position may comprise cam surfaces 56 formed on the respective sectors 52, and thrust elements 58 carried by the carriage 40 and cooperating with the cam surfaces 56 of the sector 52 each time facing the respective movable-axle wheel 42, 44. The thrust elements 58 can be formed by idle rollers with a vertical axis. The thrust elements 58 can be located on opposite sides with respect to the respective movable-axle wheel 42, 44.

The cam surfaces 56 may have a straight central section and two inclined end sections so that during movement of the carriage 40 in the horizontal direction A, the thrust elements 58 first engage the inclined sections of the cam surface 56 of a sector 52, they gradually move it towards the disengagement position and then keep it in the disengagement position for the entire period in which at least one of the thrust elements 58 is in contact with the straight section of the cam surface 56 of sector 52.

The sectors 52 can be associated with respective positioning elements 60, formed for example by elastic elements or gas springs, which return the sectors 52 to the engaged position when the contact between the thrust elements 58 of the carriage 40 and the cam surfaces 56 of the sectors 52 ceases. The inclined end portions of the cam surfaces also make sure that the movement of the sectors 52 from the disengagement position to the engagement position takes place gradually.

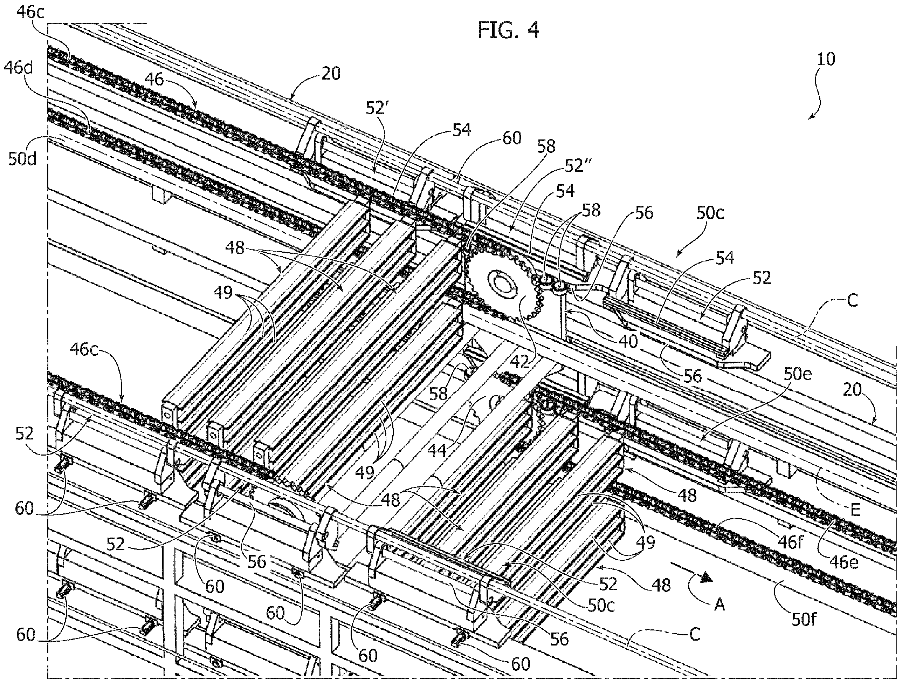

Figures 3, 4 and 5 illustrate the movement of the sectors 52 during a movement of the carriage 40 in the direction indicated by the arrow A. In the position illustrated in Figure 3, the sector indicated by 52' faces the movable-axle wheel 42 and is held in the disengagement position by the contact of the thrust elements 58 of the carriage 40 with the cam surface 56 of the sector 52'. The adjacent sector 52" is in an engagement position, as are all the other sectors 52 of the chain support 50c. In the position illustrated in Figure 4, the carriage has moved in the direction A with respect to the position of Figure 3, and the movable-axle wheel 42 faces the successive sector 52". The thrust elements 58 of the carriage 40 act on the cam surface 56 of the sector 52" and hold the sector 52" in the disengaged position, avoiding interference of the sector 52" with the movable-axle wheel 42. In the meantime, the previous sector 52' is no longer in contact with the thrust elements 58 of the carriage 40 and has returned to the engagement position in which it supports a corresponding portion of the chain 46.

During operation, the products coming from the inlet conveyor 12 in the inlet station 16 are loaded onto the product supports 48 while the chain 46 moves along the closed-loop path in the direction indicated by the arrow D in Figures 1 and 2. In the outlet station 18, all the products contained in the product supports are transferred to the outlet conveyor 14. The quantity of the products accumulated in the buffer 10 is proportional to the length of the chain section 46 included between the inlet station 16 and the outlet station 18, which depends on the position of the carriage 40 in the horizontal direction A.

The position of the carriage 40 in the direction A is controlled by the motors 36, 38 that rotate the respective wheels 22, 28. When the wheels 22, 28 are driven into rotation at the same speed, the chain 46 moves along the closed-loop path and the carriage 40 remains stationary in the same position.

If the wheel 28 is driven into rotation at a greater speed than the wheel 22, the carriage 40 moves along the direction A towards the outlet station 18 (to the right in Figures 1 and 2). This involves a reduction in the length of the chain section 46 between the inlet station 16 and the outlet station 18, and a reduction in the number of products accumulated in the buffer 10.

If the wheel 22 is driven into rotation at a greater speed than the wheel 28, the carriage 40 moves along the direction A towards the inlet station 16 (to the left in Figures 1 and 2). This involves an increase in the length of the chain section 46 between the inlet station 16 and the outlet station 18 and an increase in the number of products accumulated in the buffer 10.

The motors 36, 38 that control the wheels 22, 28 can be controlled by an electronic control unit according to the flow of products entering and leaving the buffer.

Of course, without prejudice to the principle of the invention, the details of construction and the embodiments can be widely varied with respect to those described and illustrated, without thereby departing from the scope of the invention as defined by the claims that follow.

## Claims

1. A buffer device for temporarily storing products in transport systems, comprising:
- a stationary frame (20) carrying a plurality of fixed-axle wheels (22, 24, 26, 28, 30, 32, 34),
- a carriage (40) movable with respect to the stationary frame (20) along a horizontal direction (A) and bearing at least one movable-axle wheel (42, 44),
- at least one chain (46) cooperating with said fixed-axle wheels (22, 24, 26, 28, 30, 32, 34) and with said at least one movable-axle wheel (42, 44) and extending along a closed-loop path having a predominantly horizontal development direction and including a plurality of horizontal chain sections with a fixed length (46a, 46b) and a plurality of horizontal chain sections of variable length (46c, 46d, 46e, 46f), wherein the length of said horizontal chain sections of variable length (46c, 46d, 46e, 46f) varies according to the position of said carriage (40) along said horizontal direction (A),
- a plurality of fixed chain supports (50a, 50b, 50d, 50f) that support respective horizontal chain sections (46a, 46b, 46d, 46f), and
- at least one chain support with movable sectors (50c, 50e), which supports a respective horizontal chain section of variable length (46c, 46e), including a plurality of sectors (52) movable between an engagement position and a disengagement position of the chain (46), and
- a control mechanism which moves the sectors (52) of the movable sector chain support (50c, 50e) facing said at least one movable-axle wheel (42, 44) towards the disengagement position.

2. A buffer device according to claim 1, wherein four of said fixed-axle wheels (22, 24, 26, 28) are arranged at the vertices of a quadrilateral elongated along a horizontal direction.

3. A buffer device according to claim 2, wherein the fixed-axle wheels (22, 28) whose axles are arranged along the lower horizontal side of said quadrilateral are associated with respective motors (36, 38).

4. A buffer device according to any one of the preceding claims, wherein said carriage (40) carries a first movable-axle wheel (42) and a second movable-axle wheel (44).

5. A buffer device according to claim 4, comprising two movable sector chain supports (50c, 50e), which support respective variable length chain sections (46c, 46e) tangential to the upper parts of said first and second movable-axle wheels (42, 44).

6. A buffer device according to claim 4 or claim 5, comprising two fixed chain supports (50d, 50f), which support respective variable-length chain sections (46d, 46f) tangential to lower portions of said first and second movable-axle wheels (42, 44).

7. A buffer device according to any one of the preceding claims, wherein said sectors (52) are articulated around an articulation axis (C, E) parallel to the respective horizontal chain section of variable length (46c, 46e).

8. A buffer device according to any one of the preceding claims, wherein said sectors (52) have respective chain support portions (54) which, in the engagement position, are arranged below a respective chain portion (46).

9. A buffer device according to any one of the preceding claims, wherein each of said sectors (52) has a respective cam surface (56) which cooperates with thrust elements (58) carried by said carriage (40).

10. A buffer device according to any one of the preceding claims, wherein said sectors (52) cooperate with respective positioning elements (60), which hold the sectors (52) in their respective engagement positions.
